# FASCICULE DE BREVET EUROPEEN

(11) **EP 1 616 284 B1**
(45) Date de publication et mention de la délivrance du brevet: **16.11.2011**
(21) Numéro de dépôt: 04742508.7
(22) Date de dépôt: 15.04.2004
(51) Int. Cl.: G07C 11/00, G06K 7/08, G06K 7/10, G06K 17/00

(54) **PROCÉDÉ ET DISPOSITIF DE DÉTECTION ET D'IDENTIFICATION D'OBJETS, CONTENEURS SÉCURISÉS ET SYSTÈMES POURVUS DE CE DISPOSITIF**
VERFAHREN UND VORRICHTUNG ZUR DETEKTIERUNG UND IDENTIFIZIERUNG VON OBJEKTEN, GESICHERTE BEHÄLTERN UND SYSTEMEN MIT EINEM DERARTIGEN VORRICHTUNG
METHOD AND DEVICE FOR THE DETECTION AND IDENTIFICATION OF OBJECTS, SECURE CONTAINERS AND SYSTEMS WHICH ARE PROVIDED WITH SAID DEVICE

(30) Priorité: 17.04.2003 FR 0304842
(43) Date de publication de la demande: 18.01.2006
(73) Titulaire: Alcea, 91460 Marcoussis (FR)
(72) Inventeur: POASEVARA, Claude, F-91460 Marcoussis (FR)
(74) Mandataire: Pontet, Bernard
(86) Numéro de dépôt international: PCT/FR2004/000926
(87) Numéro de publication internationale: WO 2004/095353

(56) Documents cités:
- US-A- 5 936 527
- US-A1- 2002 130 180
- US-B1- 6 204 764

## Description

La présente invention concerne un procédé de détection et d'identification d'objets. Elle vise également un dispositif de détection et d'identification d'objets mettant en oeuvre ce procédé, des conteneurs d'objets et systèmes pourvus de ce dispositif, ainsi que des objets adaptés pour ce procédé.

Il existe des besoins de détection et d'identification d'objets présentant un caractère sensible en matière de sécurité, tels que des clefs et trousseaux de clés ou des armes. On connaît déjà des armoires à clés contenant des modules prévus pour recevoir des clés, ces modules récepteurs pouvant être pourvus de moyens de verrouillage. De même, il existe déjà des armoires sécurisées de stockage d'armes comportant des dispositifs de verrouillage de ces armes.

Les objets destinés à être stockés dans ces armoires sont généralement pourvus de moyens d'identification telles que des composants d'identification électroniques à contact de type « Dallas » ou des composants de type étiquette RF. Les dispositifs de verrouillage associés à ces objets incluent des modules lecteurs prévus pour coopérer avec ces composants d'identification.

Dans le cas spécifique d'une armoire à clefs, prévoir une identification et un verrouillage pour chaque clef ou trousseau de clefs muni de moyens d'identification implique actuellement de disposer d'autant de modules lecteurs que de modules de verrouillage de ces clefs ou trousseaux de clefs. Ceci a pour effet d'induire des coûts de réalisation pour une armoire à clefs de grande capacité, du fait du coût unitaire de chaque module lecteur.

Le document US 6 204 764 A1 décrit un système pour le suivi d'objets pourvus d'une étiquette RFID comprenant un code d'identification unique. Chaque objet est disposé dans un réceptacle muni d'une antenne RFID. L'antenne RFID de chaque réceptacle est configurée de sorte qu'elle peut activer l'étiquette RFID de chaque objet se trouvant dans le réceptacle et recevoir le code d'identification transmis par l'étiquette RFID.

Le but de la présente invention est de proposer un procédé de détection et d'identification d'une pluralité d'objets, qui permette de réduire significativement le coût de réalisation d'un équipement sécurisé pour contenir de tels objets.

Cet objectif est atteint avec un procédé selon la revendication 1.

Le procédé de détection et d'identification selon l'invention permet ainsi de réaliser un système ne requérant qu'un seul module lecteur apte à communiquer avec une pluralité d'objets, ce qui contribue à une réduction significative des coûts de réalisation.

L'antenne fixe secondaire peut être couplée électriquement successivement à chacune des antennes fixes de chaque module récepteur.

Chaque couplage électromagnétique entre une antenne fixe d'un module récepteur et des moyens de transmission sans fil d'un objet peut avantageusement induire une fourniture, par couplage inductif, d'énergie électrique issue d'un module d'alimentation relié à l'antenne fixe primaire, aux moyens d'identification au sein dudit objet.

Chaque couplage électromagnétique entre une antenne fixe d'un module récepteur et des moyens de transmission sans fil d'un objet peut aussi permettre une transmission de données d'identification émises par les moyens d'identification dudit objet vers le module lecteur.

Dans une forme de réalisation avantageuse du procédé selon l'invention, ce procédé comprend en outre un traitement des données d'identification issues des moyens d'identification d'un objet, et une commande sélective de moyens de blocage/verrouillage associés au module récepteur dont l'antenne est en couplage électromagnétique avec les moyens de transmission sans fil dudit objet.

Dans une version particulière de l'invention, l'antenne fixe secondaire de lecture est reliée à l'antenne fixe de réception via une pluralité de tronçons de liaison en cascade comprenant chacun une liaison électrique entre une antenne secondaire intermédiaire du tronçon de liaison et une antenne primaire intermédiaire de ce tronçon de liaison et un couplage électromagnétique entre cette antenne primaire intermédiaire et une antenne secondaire intermédiaire d'un tronçon de liaison suivant.

Suivant un autre aspect de l'invention, il est proposé un dispositif selon la revendication 8.

Les moyens de connexion sélective sont agencés pour connecter séquentiellement chaque antenne fixe de module à l'antenne fixe secondaire.

Le dispositif de détection et d'identification selon l'invention peut en outre avantageusement comprendre un module d'alimentation électrique relié à l'antenne fixe primaire, ce module étant agencé pour transmettre de l'énergie électrique aux moyens d'identification d'un objet dont les moyens de transmission sans fil se trouvent en couplage inductif avec une antenne fixe d'un module récepteur, via le couplage électromagnétique entre l'antenne fixe primaire et l'antenne secondaire et le couplage électromagnétique entre l'antenne fixe de module récepteur et les moyens de transmission sans fil dudit objet.

Suivant encore un autre aspect de l'invention, il est proposé un équipement selon la revendication 14 pour contenir de façon sécurisée une pluralité d'objets pourvus chacun de moyens d'identification et de moyens de transmission sans fil, comprenant :
- un ensemble de modules prévus pour recevoir chacun un objet parmi ladite pluralité d'objets, chaque module récepteur comprenant des moyens pour bloquer/verrouiller sélectivement un objet, et
- des moyens pour commander lesdits moyens de blocage/verrouillage sélectif,
   **caractérisé en ce qu'**il comprend en outre une pluralité d'antennes fixes associés chacune à un module récepteur parmi la pluralité de modules récepteurs,
- des moyens pour connecter sélectivement une antenne parmi ladite pluralité d'antennes fixes à une antenne fixe secondaire commune, et
- une antenne fixe primaire en couplage électromagnétique avec l'antenne fixe secondaire, et
- un module lecteur commun adapté pour lire des données d'identification issues desdits moyens d'identification, ce module lecteur étant relié à l'antenne fixe primaire et coopérant avec les moyens de commande.

Lorsqu'il s'agit d'un équipement prévu pour la gestion d'un ensemble de clefs, chaque module récepteur peut alors comprendre:
- un logement agencé pour recevoir une partie de couplage mécanique d'une clef ou d'un porte-clef, cette partie incluant les moyens de transmission sans fil,
- une antenne fixe de module disposée à proximité dudit logement de sorte à réaliser un couplage électromagnétique entre ladite antenne fixe et les moyens de transmission sans fil d'un objet dont la partie de couplage mécanique est engagée dans le logement récepteur, et
- un électroaimant comportant une partie mobile agencée pour s'engager dans ladite partie de couplage mécanique.

La partie de couplage mécanique peut comporter une extrémité incluant dans une cavité sensiblement cylindrique les moyens de transmission sans fil et les moyens d'identification de l'objet.

La partie de couplage mécanique peut par exemple comprendre:
- une première pièce comportant :
- une tête incluant les moyens de transmission sans fil et les moyens d'identification,
- une partie écrantée pour recevoir la pièce mobile d'un électroaimant de blocage/verrouillage,
- une partie de couplage mécanique irréversible, et
- une seconde pièce comprenant au moins un logement pour recevoir la partie de couplage mécanique irréversible de la première pièce.

On peut aussi prévoir un équipement selon l'invention agencé pour contenir de façon sécurisée des armes pourvues de moyens d'identification et de moyens de transmission sans fil.

Suivant encore un autre aspect de l'invention, il est proposé un système selon la revendication 24.

Le module identifiant du véhicule peut être inclus dans l'une et/ou des plaques d'immatriculation du véhicule, et être fourni sous la forme d'une puce ou étiquette radiofréquence (tag RF) .

D'autres avantages et caractéristiques de l'invention apparaîtront à l'examen de la description détaillée d'un mode de mise en oeuvre nullement limitatif, et des dessins annexés sur desquels :
- la figure 1 illustre schématiquement, au titre de l'art antérieur, le principe d'identification par radiofréquence de proximité mis en oeuvre dans le procédé de détection et d'identification selon l'invention ;
- la figure 2 illustre schématiquement le principe du procédé de détection et d'identification selon l'invention ;
- la figure 3 illustre schématiquement la mise en oeuvre du procédé de détection et d'identification selon l'invention pour un ensemble de modules récepteurs d'objets ;
- la figure 4 illustre le fonctionnement du procédé de détection et d'identification selon l'invention lors de la détection d'un objet ;
- les figures 5A, 5B et 5C sont respectivement une vue de dessus, une vue de face et une vue latérale d'une barre de modules récepteurs d'un équipement conteneur de clés selon l'invention, représentée partiellement ;
- la figure 5C est une vue en perspective simplifiée d'un module récepteur correspondant à la barre de modules récepteurs représentés en figures 5A à 5C ;
- les figures 6A et 6B sont respectivement une vue latérale et une vue de dessus d'un porte-clé selon l'invention ;
- la figure 7 illustre un système de détection et d'identification selon l'invention, monté en cascade ; et
- la figure 8 illustre une application du procédé selon l'invention pour réaliser un système de détection et d'identification de véhicules sur un ensemble de places de stationnement.

On va maintenant décrire, en référence aux figures précitées, le principe de fonctionnement du procédé de détection et d'identification selon l'invention.

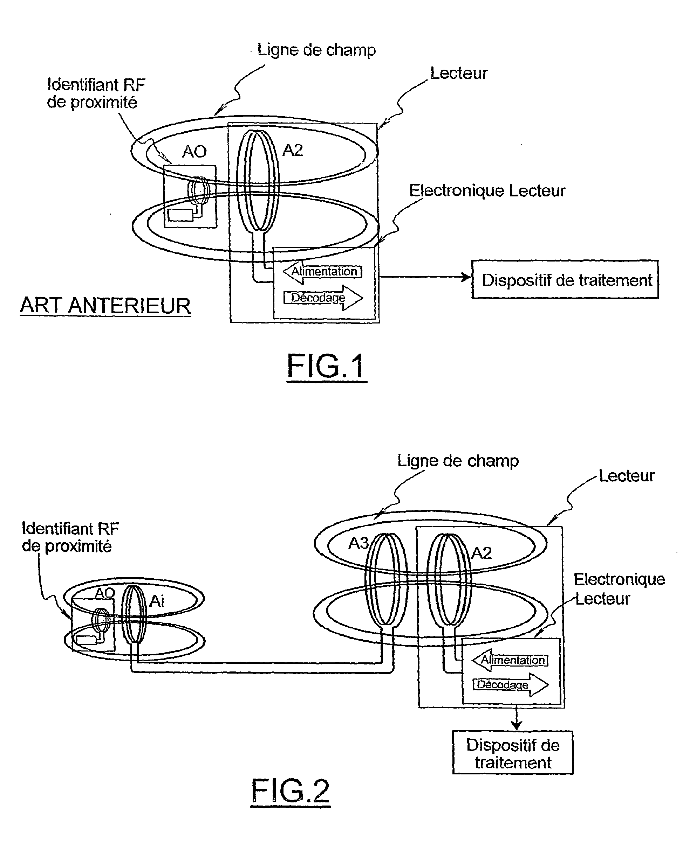

Ce procédé met en oeuvre le principe bien connu de l'identification par Radio Fréquence de proximité (RFID) illustré par la figure 1. Sur ce principe, l'électronique d'un composant identifiant est alimentée par le courant produit par l'alimentation de l'électronique d'un lecteur et induit dans une antenne A0 par une antenne A2.

Si la distance entre l'antenne A0 et l'antenne A2 est suffisamment faible pour permettre l'induction d'un courant suffisant, alors l'électronique de l'identifiant émet son numéro radiofréquence via l'antenne A0. Ce numéro est capté par l'antenne A2 puis décodé par l'électronique du lecteur. Les distances entre antennes couramment pratiquées dans les applications de ce principe sont de l'ordre de 5 à 80 cm.

Dans le procédé de détection et d'identification selon l'invention illustré schématiquement en figure 2, on met en oeuvre deux antennes A3, Ai simplement re-bouclées électriquement, qui permettent, sans alimentation ni dispositif de traitement électronique, de déporter le phénomène d'induction et de transmission de données, et donc le principe complet d'identification par radiofréquence de proximité de l'art antérieur.

Dans ce procédé selon l'invention, l'alimentation de l'électronique d'un lecteur produit un courant induit dans une antenne A3. Ce courant, diminué des pertes en ligne, se retrouve dans la bobine antenne Ai.

Si la distance entre l'antenne A0 et l'antenne Ai est suffisamment faible pour permettre l'induction d'un courant suffisant, l'électronique de l'identifiant émet son numéro en radiofréquence via l'antenne A0. Ce numéro est capté par l'antenne Ai, retransmis par le câble à l'antenne A3, qui le réémet vers l'antenne A2. Ce numéro est alors capté par l'antenne A2 et décodé par l'électronique du lecteur.

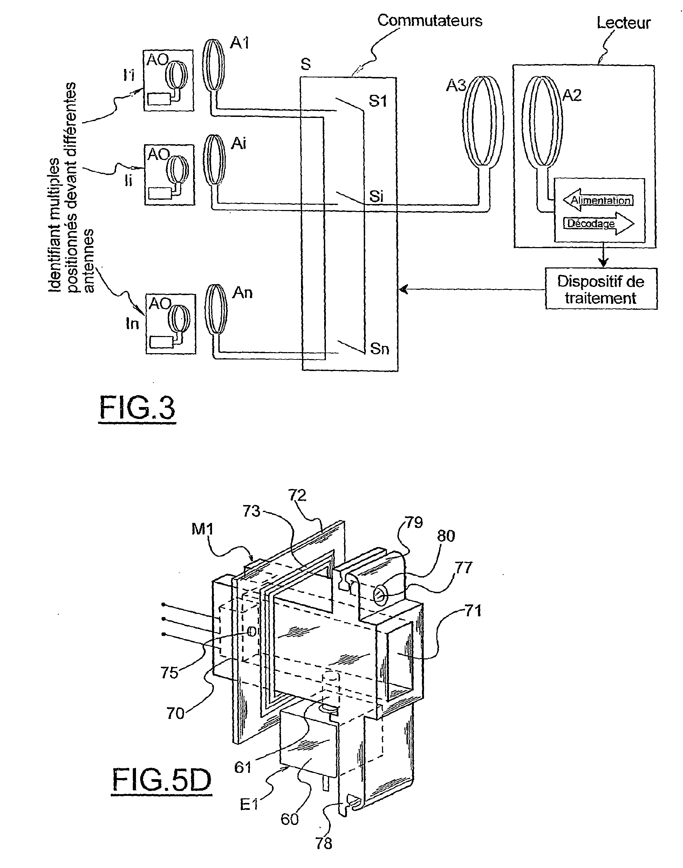

Le procédé de détection et d'identification selon l'invention peut être mis en oeuvre pour un ensemble de modules récepteurs, comme l'illustre schématiquement la figure 3. Pour cela, on met en oeuvre un dispositif de commutateurs analogiques permettant de réaliser un multiplexage des antennes associées chacune à des identifiants. Dans cette configuration, des identifiants multiples Il, ..., Ii, ..., In peuvent être positionnés devant différentes antennes Al,...,Ai,...,An.

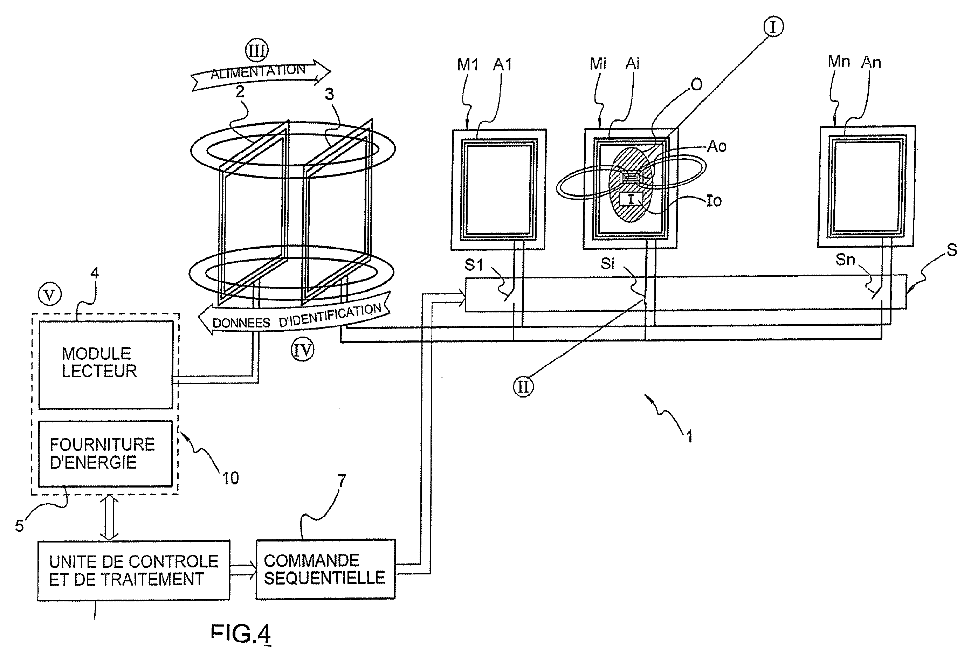

On va maintenant, en référence à la figure 4 qui illustre schématiquement un système de détection et d'identification comportant une pluralité de modules récepteurs, différentes étapes du procédé selon l'invention.

Le dispositif de détection et d'identification 1 comprend, en référence à la figure 1, un ensemble de modules récepteurs Ml, ..., Mi, ..., Mn pourvus chacun d'une antenne de module récepteur Al, ...,Ai, ...An, une antenne secondaire 3 reliée en parallèle sur les antennes de module récepteur Al, ..., Ai, ...An, via un ensemble S de commutateurs analogiques Sl, ..., Si, ...Sn, une antenne primaire 2 en couplage inductif avec l'antenne secondaire 3, un dispositif de lecture 10 incluant un module lecteur 4 et un module 4 de fourniture d'énergie, une unité de contrôle et de traitement 6 et un module 7 de commande séquentielle des commutateurs analogiques.

Lorsqu'un objet 0 pourvu d'un circuit d'identification Io et d'une antenne de transmission A0 se trouve (étape I) suffisamment à proximité d'une antenne de module Ai pour que son antenne A0 se trouve en couplage électromagnétique avec cette antenne de module Ai, la commutation (étape II) en position fermée du commutateur Si associé à ce module Mi va avoir pour effet de permettre, via le couplage inductif entre les deux antennes respectivement primaire 2 et secondaire 3 et via le couplage inductif entre l'antenne de module Ai et l'antenne de transmission A0 au sein de l'objet, un transfert d'énergie (étape III) pour alimenter le circuit d'identification I de cet objet.

Celui-ci émet en retour, via le même canal, des données d'identification qui sont reçues par l'antenne Ai, transmises par courant induit et réémises par l'antenne primaire 3, captée par l'antenne primaire A2 (étape IV) et décodées (et lues) (étape V) par le module lecteur 4, puis traitées par l'unité de contrôle et de traitement.

Le procédé de détection et d'identification selon l'invention peut trouver des applications pour la reconnaissance et le contrôle d'accès à de multiples objets équipés d'identifiants radiofréquence (RF) et placés dans un endroit déterminé, par exemple une armoire à clés, un casier à documents ou un coffre à armes.

Il est important de noter que dans toutes les applications précitées, le procédé de détection et d'identification selon l'invention permet en outre de transférer des informations ou des données vers les objets identifiés et inscrire ces informations ou données dans des composants mémoires prévus dans l'électronique d'identification de ces objets.

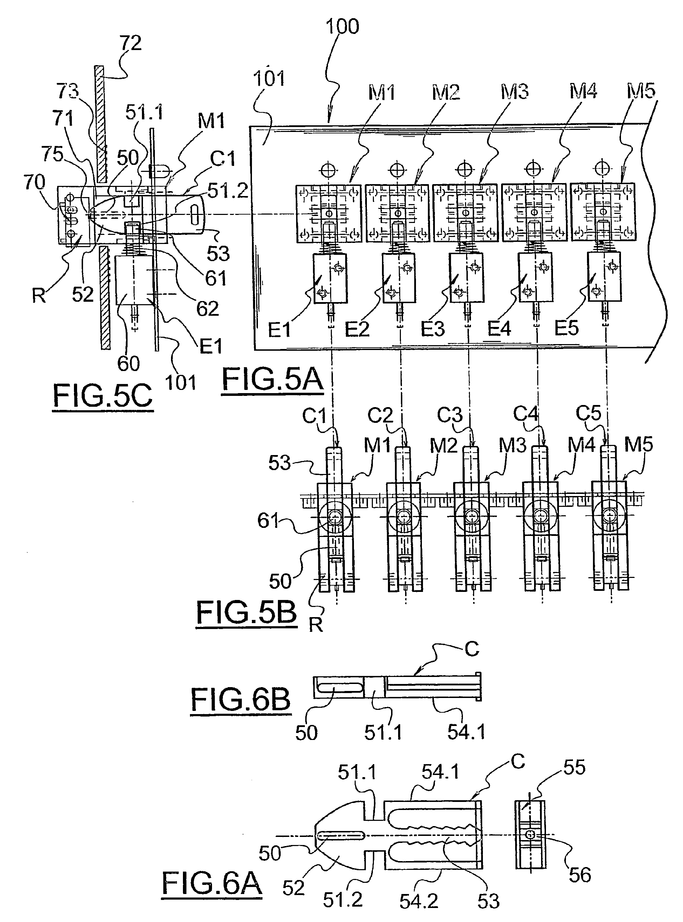

Dans un exemple de réalisation d'un système d'accès contrôlé à des clés ou trousseaux de clés, des modules récepteurs M1-M5 de clés C1-C5, faisant partie d'un ensemble 100 de modules disposés linéairement, équipés de dispositifs de verrouillage sont placés sur une plaque support 101, par exemple une plaque de circuit imprimé, comme l'illustrent les figures 5A à 5D.

Chaque module récepteur M1 comporte un logement 71 adapté pour recevoir la partie active d'une clé C1 incluant un petit tube de verre 50 contenant, selon des techniques connues dans le domaine de l'identification RFID, une électronique d'identification et un bobinage cylindrique miniaturisé. La partie active de la clé C1 comprend en outre deux évidements 51.1, 51.2 ménagés de façon à recevoir l'axe mobile 61 d'un électro-aimant de verrouillage E1 dont la partie fixe 60 est fixée à la plaque support 101. Cet électroaimant E1 est en outre pourvu d'un ressort 62 maintenant par défaut l'axe mobile 61 en position de verrouillage d'un clé insérée dans le module récepteur M1.

Lorsqu'une clé C1 est effectivement insérée dans un module récepteur M1, son électronique d'identification 50 se trouve en couplage électromagnétique avec une antenne réceptrice 73 disposée sur une plaque support 72 et reliée électriquement à un dispositif de commutation d'antennes S du type représenté schématiquement en figure 4.

L'antenne réceptrice 73 peut par exemple être réalisée sous la forme d'un circuit imprimé sur une plaque de résine époxy ou tout autre matériau support de circuit imprimé.

Le module récepteur M1 comprend en outre, au fond du logement récepteur 71, un composant contacteur 70 pourvu d'un plot mobile de contact 75 disposé de sorte que lorsqu'une clé C1 est insérée dans le logement récepteur 71, l'extrémité 52 de la clé C1 vient pousser le plot de contact 75, ce qui permet, au moyen d'un circuit. électrique (non représenté) incluant le contacteur 70, de détecter l'insertion d'une clé dans ce module récepteur M1. Cette information d'insertion est par exemple traitée pour alimenter sélectivement l'électro-aimant correspondant à ce module récepteur, contribuant à ainsi à réduire significativement l'énergie électrique consommée, par rapport à une autre solution technique qui consisterait à alimenter l'ensemble des électro-aimants d'un système complet.

Les modules récepteurs M1 comprennent en outre, en référence à la figure 5D, des logements cylindriques frontaux prévus pour contenir des diodes électroluminescentes (LED) 77 dont l'alimentation sélective permet de fournir à l'utilisateur du système une indication sur le ou les modules récepteurs et le ou leurs contenants respectifs au(x)quel(s) cet utilisateur est autorisé à accéder.

Il est à noter que l'antenne de réception du module récepteur peut avoir bien d'autres formes et géométries que celles de l'antenne représentée en figures 5C et 5D. Elle peut par exemple être réalisée sous la forme d'un solénoïde de fil conducteur fin enroulé sur un gabarit de section quelconque, par exemple circulaire ou carrée. On peut aussi prévoir une antenne de réception de type solénoïde enroulé sur un cylindre plein en matériau ferromagnétique doux pour augmenter la portée axiale de détection.

Plus généralement, il existe une grande variété de géométries possibles pour des paires d'antennes utilisées en technologie RFID. Il suffit en fait de réaliser une adaptation des géométries et nombre de spires respectifs des deux antennes devant se trouver en couplage électromagnétique.

Dans un mode particulier de réalisation d'un porte-clé pouvant être utilisé dans une armoire à clés ou un tableau de clés selon l'invention, illustré par les figures 6A et 6B, le porte-clé C comporte à l'extrémité de sa partie active une partie 52 de forme pseudo elliptique permettant de faire remonter l'axe 61 de l'électro-aimant E1 lors de l'insertion de la partie active du porte-clé C dans le logement du module récepteur M1. La cavité ménagée dans la partie active du porte-clé C est conçue pour recevoir un petit tube de verre de diamètre 2,12mm et de longueur 12mm contenant un composant électronique.

Le porte-clé C comprend deux évidements 51.1, 51.2 prévus pour recevoir en position de verrouillage un axe mobile d'un électro-aimant de verrouillage et deux parties latérales 54.1, 54.2 s'étendant parallèlement à partir de la partie active du porte-clé et une partie centrale dentelée 53 du porte-clé s'étendant également depuis la partie active du porte-clé et prévue pour être engagée de manière irréversible dans un logement 56 ménagé dans une pièce de fermeture 56 lorsque des clés ont été préalablement disposées dans le porte-clés C.

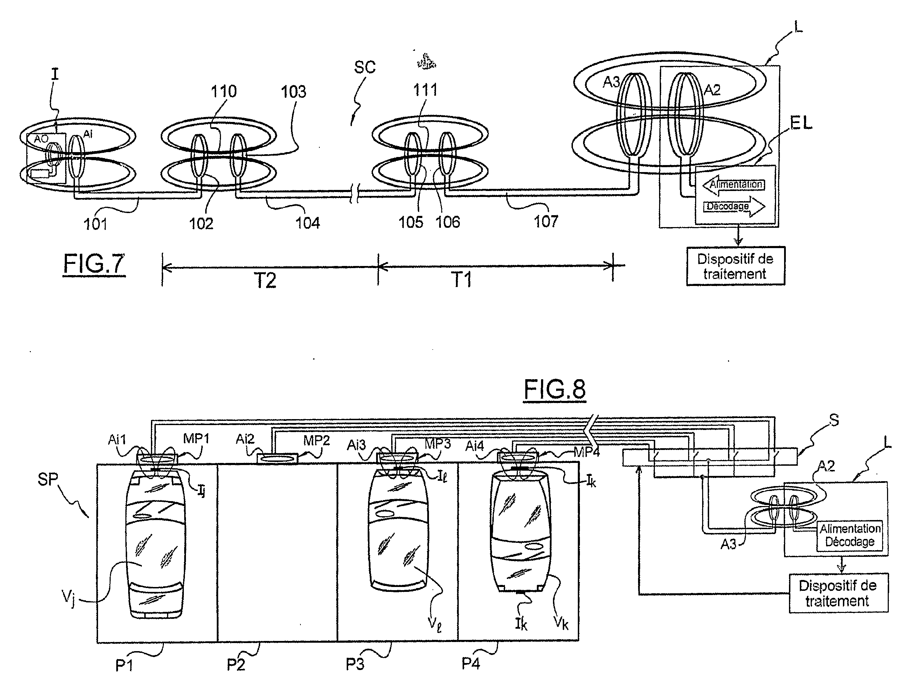

Il est possible de réaliser un système d'identification et de détection selon l'invention en cascadant plusieurs tronçons de couplage électromagnétique/liaison électrique, comme l'illustre la figure 7.

Ainsi, un système de détection et d'identification en cascade SC peut comprendre, entre d'une part une antenne fixe Ai de module récepteur prévue pour être en couplage électromagnétique avec l'antenne Ao d'un objet pourvu d'un circuit identifiant I et d'autre part une antenne fixe secondaire A3 en couplage électromagnétique permanent avec une antenne A2 d'un module lecteur L incluant une électronique lecteur EL implémentant des fonctions d'alimentation et de décodage :
- une première liaison électrique 101 entre l'antenne Ai de module récepteur et une première antenne secondaire 102 en couplage électromagnétique 110 avec une première antenne primaire intermédiaire 103,
- une seconde liaison électrique 104 entre la première antenne primaire intermédiaire 103 et une seconde antenne secondaire intermédiaire 105 en couplage électromagnétique 111 avec une seconde antenne primaire intermédiaire 106, et
- une seconde liaison électrique 107 entre la seconde antenne primaire intermédiaire 106 et l'antenne fixe secondaire A3.

La liaison entre l'antenne secondaire fixe A3 associée au module lecteur et l'antenne Ai du module récepteur est ainsi assurée par une cascade de deux tronçons de liaison T1, T2 comprenant chacun une liaison électrique entre deux antennes d'un tronçon et un couplage électromagnétique entre une antenne primaire intermédiaire de ce tronçon et une antenne secondaire intermédiaire du tronçon suivant.

Ce système de détection et d'identification en cascade SC peut bien sûr inclure un système de commutation S du type représenté en figure 3 pour permettre de traiter un ensemble de modules récepteurs dotés chacun d'une antenne de réception.

Le procédé de détection et d'identification peut aussi être mis en oeuvre dans un système de détection et d'identification de véhicules sur des places de stationnement, comme l'illustre schématiquement la figure 8.

Un système de détection et d'identification de véhicules SP peut ainsi comprendre, à proximité immédiate de chaque place d'un ensemble de places de stationnement P1,P2,P3,P4, des modules récepteurs MP1, MP2, MP3, MP4 pourvus chacun d'une antenne de réception Ai1, Ai2, Ai3, Ai4 reliée électriquement, via un système de commutation S, à une antenne commune secondaire A3 en couplage électromagnétique permanent avec une antenne A2 d'un module lecteur L implémentant des fonctions d'alimentation et de décodage et délivrant des données de détection et d'identification à un dispositif de traitement prévu notamment pour commander le dispositif de commutation S.

Lorsque des véhicules Vj, Vk, Vl pourvus chacun de dispositifs identifiants Ij, Ik, Il incluant chacun une antenne d'identification, se placent en positionnement de stationnement sur un emplacement P1, P4, P3, leur antennes d'identification respectives se trouvent en couplage électromagnétique avec les antennes de réception Ai1, Ai4, Ai3 respectives desdits emplacements, ce qui induit une alimentation des dispositifs identifiants Ij, Ik, Il et, en retour, un transfert d'informations d'identification depuis les dispositifs identifiants vers le module lecteur commun L.

Ces dispositifs identifiants peuvent être réalisés par exemple sous la formes d'étiquettes (tags) RFID intégrées ou insérées dans les plaques d'immatriculation des véhicules ou dans toute autre partie du véhicule appropriée pour permettre un couplage électromagnétique avec une antenne de réception associée à un emplacement de stationnement. On peut d'ailleurs prévoir qu'un véhicule Vk soit équipée de deux dispositifs identifiants Ik, Ik' intégrés dans les plaques d'immatriculation avant et arrière de ce véhicule.

Dans une autre forme de réalisation d'un système de détection et d'identification de véhicule, on peut prévoir que les antennes de réception associés à chaque emplacement de stationnement soient des boucles inductives noyées dans le revêtement de ces emplacements, chaque véhicule concerné étant pourvu d'une dispositif identifiant de type RFID fixé à son châssis ou disposé dans un emplacement approprié du véhicule.

Bien sûr, l'invention n'est pas limitée aux exemples qui viennent d'être décrits et de nombreux aménagements peuvent être apportés à ces exemples sans sortir du cadre de l'invention.

## Revendications

1. Procédé pour détecter et identifier un objet (O) pourvu de moyens d'identification (I) et de moyens de transmission sans fil (A0), cet objet (O) étant présenté à proximité d'un module récepteur (Mi) parmi une pluralité de modules récepteurs (M1-Mn), ce procédé comprenant:
- un couplage électromagnétique entre les moyens de transmission sans fil (A0) dudit objet (0) et une antenne fixe (Ai) associée audit module récepteur (Mi) ;
**caractérisé en ce qu'**il comprend en outre :
- une commutation analogique entre chaque antenne fixe (A1-An) associée à un module récepteur (M1-Mn) et une antenne fixe secondaire (3) commune à l'ensemble desdites antennes fixes (A1-An) de module récepteur, de sorte que ladite antenne fixe secondaire (3) est couplée électriquement successivement à chacune des antennes fixes (A&-An) de chaque module récepteur (M1-Mn), cette antenne fixe secondaire (3) commune étant en couplage électromagnétique avec une antenne fixe primaire (2) reliée à un module lecteur (4) adapté pour lire des données d'identification (10) issues desdits moyens d'identification (I).

2. Procédé selon la revendication 1, **caractérisé en ce que** qu'il comprend en outre une transmission d'informations depuis le module lecteur (4) vers les moyens d'identification (I) d'un objet (O) préalablement détecté et identifié.

3. Procédé selon la revendication 2, **caractérisé en ce qu'**il comprend en outre une écriture d'informations transmises depuis le module lecteur (4) dans des moyens de stockage d'information au sein d'un objet (O) préalablement détecté et identifié.

4. Procédé selon l'une des revendications précédentes, **caractérisé en ce que** chaque couplage électromagnétique entre une antenne fixe (A1-An) d'un module récepteur (M1-Mn) et des moyens de transmission sans fil (A0) d'un objet (O) induit une fourniture, par couplage inductif, d'énergie électrique issue d'un module d'alimentation (5) relié à l'antenne fixe primaire (2), aux moyens d'identification (I) au sein dudit objet (O) .

5. Procédé selon la revendication 4, **caractérisé en ce que** chaque couplage électromagnétique entre une antenne fixe (A1-An) d'un module récepteur (M1-Mn) et des moyens de transmission sans fil d'un objet (I) induit une transmission de données d'identification (10) émises par les moyens d'identification (I) dudit objet (O) vers le module lecteur (4).

6. Procédé selon l'une des revendications précédentes, **caractérisé en ce qu'**il comprend en outre un traitement des données d'identification (10) issues des moyens d'identification (I) d'un objet (O), et une commande sélective de moyens de blocage/verrouillage (Si) associés au module récepteur (Mi) dont l'antenne (Ai) est en couplage électromagnétique avec les moyens de transmission sans fil (A0) dudit objet (O) .

7. Procédé selon l'une des revendications précédentes, comprenant :
- un couplage électromagnétique entre les moyens de transmission sans fil (A0) dudit objet (O) et une antenne fixe (Ai) de réception associée à un module récepteur (Mi),
- un couplage électromagnétique permanent entre une antenne fixe secondaire (3) de lecture et une antenne d'un module lecteur (Ai),
**caractérisé en ce que** l'antenne fixe secondaire (3) de lecture est reliée à l'antenne fixe de réception (Ai) via une pluralité de tronçons de liaison en cascade comprenant chacun une liaison électrique entre une antenne secondaire intermédiaire (102) dudit tronçon de liaison et une antenne primaire intermédiaire (103) dudit tronçon de liaison et un couplage électromagnétique entre ladite antenne primaire intermédiaire (103) et une antenne secondaire intermédiaire (105) d'un tronçon de liaison suivant.

8. Dispositif (1) pour détecter et identifier un objet (O) pourvu de moyens d'identification (I) et de moyens de transmission sans fil (A0), cet objet (O) étant présenté à proximité d'un module récepteur (Mi) parmi une pluralité de modules récepteurs (M1-Mn), ce dispositif (1) comprenant :
- une pluralité d'antennes fixes (A1-An) associés chacune à un module récepteur parmi la pluralité de modules récepteurs (M1-Mn),
**caractérisé en ce qu'**il comprend en outre :
- des moyens de commutation analogique (S) pour connecter sélectivement une antenne parmi ladite pluralité d'antennes (M1-Mn) fixes à une antenne fixe secondaire (3) commune,
- une antenne fixe primaire (2) en couplage électromagnétique avec l'antenne fixe secondaire (3), et
- un module lecteur (4) commun adapté pour lire des données d'identification (10) issues desdits moyens d'identification (I), ce module lecteur (4) étant relié à l'antenne fixe primaire (2).

9. Dispositif selon la revendication 8, **caractérisé en ce que** le module lecteur (4) commun est en outre adapté pour transmettre des informations vers un objet (O) à proximité d'un module récepteur (Mi).

10. Dispositif selon l'une des revendications 8 ou 9, **caractérisé en ce que** les moyens de connexion sélective (S) sont agencés pour connecter séquentiellement chaque antenne (A1-An) fixe de module à l'antenne fixe secondaire(3).

11. Dispositif selon l'une des revendications 8 à 10, **caractérisé en ce qu'**il comprend en outre un module (5) d'alimentation électrique relié à l'antenne fixe primaire (2), ce module (5) étant agencé pour transmettre de l'énergie électrique aux moyens d'identification (I) d'un objet (O) dont les moyens de transmission sans fil (A0) se trouvent en couplage inductif avec une antenne fixe (Ai) d'un module récepteur (Mi), via le couplage électromagnétique entre l'antenne fixe primaire (2) et l'antenne secondaire (3) et le couplage électromagnétique entre l'antenne fixe (Ai) de module récepteur et les moyens de transmission sans fil (A0) dudit objet (O).

12. Dispositif selon l'une des revendications 9 à 11, **caractérisé en ce que** l'antenne secondaire commune (105) est en couplage électromagnétique avec une antenne primaire intermédiaire (106) cette antenne primaire intermédiaire (106) étant reliée électriquement à une antenne secondaire intermédiaire (3) en couplage électromagnétique avec l'antenne fixe primaire (2) reliée électriquement au module lecteur.

13. Dispositif selon la revendication 12, **caractérisé en ce qu'**il comprend en outre une pluralité de paires d'antennes intermédiaires (103 ; 105) constituées chacune d'une antenne primaire intermédiaire (103) et d'une antenne secondaire intermédiaire (105) reliées électriquement.

14. Equipement (100) pour contenir de façon sécurisée une pluralité d'objets pourvus chacun de moyens d'identification (50) et de moyens de transmission sans fil, comprenant :
- un ensemble de modules (M1-M5) prévus pour recevoir chacun un objet parmi ladite pluralité d'objets, chaque module récepteur (M1-M5) comprenant des moyens pour bloquer/verrouiller sélectivement un objet, et
- des moyens pour commander lesdits moyens de blocage/verrouillage sélectif,
**caractérisé en ce qu'**il comprend en outre au moins un dispositif selon la revendication 8, le module lecteur (4) dudit dispositif étant relié à l'antenne fixe primaire (2) et coopérant avec lesdits moyens de commande.

15. Equipement selon la revendication 14, **caractérisé en ce qu'**il comprend en outre des moyens de fourniture d'énergie électrique (5) reliés à l'antenne fixe primaire (2), qui sont agencés pour alimenter électriquement les moyens d'identification (50) d'un objet dont les moyens de transmission sans fil se trouvent en couplage inductif avec l'une antenne de l'un des modules récepteurs (M1-M5) dudit équipement.

16. Equipement selon l'une des revendications 14 ou 15, prévu pour la gestion d'un ensemble de clefs (C1-C5), **caractérisé en ce que** chaque module récepteur (M1-M5) comprend :
- un logement (71) agencé pour recevoir une partie de couplage mécanique (51.1,51.2) d'une clef (C1-C5) ou d'un porte-clef, cette partie incluant les moyens de transmission sans fil (50),
- une antenne fixe (73) de module disposée à proximité dudit logement (71) de sorte à réaliser un couplage électromagnétique entre ladite antenne fixe (73) et les moyens de transmission sans fil d'un objet dont la partie de couplage mécanique (51.1, 51.2) est engagée dans le logement récepteur (71), et
- un électroaimant (E1-E5) comportant une partie mobile (61) agencée pour s'engager dans ladite partie de couplage mécanique (51.1, 51.2).

17. Equipement selon la revendication 16, **caractérisé en ce que** la partie de couplage mécanique (51.1, 51.2) comporte une extrémité incluant dans une cavité (50) sensiblement cylindrique les moyens de transmission sans fil et les moyens d'identification de l'objet.

18. Equipement selon l'une des revendications 16 ou 17, **caractérisé en ce que** la partie de couplage mécanique (51.1, 51.2) comprend :
- une première pièce comportant :
- une tête incluant les moyens de transmission sans fil et les moyens d'identification,
- une partie écrantée pour recevoir la pièce mobile d'un électroaimant de blocage/verrouillage,
- une partie de couplage mécanique irréversible, et
- une seconde pièce comprenant au moins un logement pour recevoir la partie de couplage mécanique irréversible de la première pièce.

19. Equipement selon l'une des revendications 14 ou 15, prévu pour contenir de façon sécurisée des armes pourvues de moyens d'identification et de moyens de transmission sans fil.

20. Application du procédé selon l'une des revendications 1 à 7, pour la gestion de clés (C1-C5) ou de trousseaux de clés dans une armoire à clés.

21. Application du procédé selon l'une des revendications 1 à 7, pour la gestion de documents dans un casier à documents.

22. Application du procédé selon l'une des revendications 1 à 7, pour la gestion d'armes dans un coffre à armes.

23. Application du procédé selon l'une des revendications 1 à 7, pour l'identification d'un véhicule sur un emplacement de stationnement.

24. Système (SP) pour détecter et identifier un véhicule (Vj,Vk,Vl) sur un emplacement d'un parc de stationnement (P1-P4), adapté pour mettre en oeuvre le procédé selon l'une des revendications 1 à 7, **caractérisé en ce que** cet emplacement (P1-P4) comprend une antenne fixe de réception (Ai1-Ai4) reliée électriquement à une antenne fixe secondaire (A3) commune à l'ensemble des emplacements (P1-P4) dudit parc de stationnement et en couplage électromagnétique avec une antenne fixe primaire (A2) d'un module lecteur commun (L), ledit véhicule (Vj,Vk,Vl) étant équipé d'un module identifiant comprenant une antenne agencée au sein dudit véhicule pour se trouver en couplage électromagnétique avec l'antenne fixe de réception dudit emplacement lorsque ledit véhicule (Vj,Vk,Vl) se trouve en stationnement sur ledit emplacement (P1-P4).

25. Système selon la revendication 24, **caractérisé en ce que** le module identifiant (Ij, Ik, Il) du véhicule (Vj,Vk,Vl) est inclus dans l'une et/ou des plaques d'immatriculation dudit véhicule.

26. Système selon la revendication 25, **caractérisé en ce que** le module identifiant (Vj,Vk,Vl) du véhicule (Ij, Ik, Il) est fourni sous la forme d'une étiquette radiofréquence (tag RF).

## Claims

1. Method for the detection and identification of an object (O) provided with identification means(I) and wireless transmission means (A0), the object (O) being located close to one receiver module (Mi) among a plurality of receiver modules (M1-Mn), the method comprising:
- electromagnetic coupling between the wireless transmission means (A0) of the object (O) and a fixed antennae (Ai) associated with said receiver module (Mi) ;
**characterized in that** it also comprises:
- analog switching between each fixed antennae (A1-An) associated to a receiver module (M1-Mn) and a secondary fixed antenna (3) common to all of the fixed antennae (A1-An) of receiver module, such that said secondary fixed antenna (3) is electrically coupled to each of the fixed antennae (A1-An) of each receiver module (M1-Mn) in succession, this common secondary fixed antenna (3)being electromagnetically coupled to a primary fixed antenna (2) connected to a reader module(4) configured to read identification data (10) originating from said identification means (I).

2. The method according to claim 1, **characterized in that** it also comprises a transmission of information from the reader module (4) to the identification means (I) of a previously detected and identified object (O).

3. Method according to claim 2, **characterized in that** it also comprises writing of information transmitted from the reader module (4) into information storage means within a previously detected and identified object (0).

4. Method according to one of the previous claims, **characterized in that** each electromagnetic coupling between a fixed antenna (A1-An) of a receiver module (M1-Mn) and wireless transmission means (A0) of an object (O) induces a supply to the identification means (I) within said object (O), by inductive coupling, of electrical energy originating from a power supply module (5) connected to the primary fixed antenna (2).

5. Method according to claim 4, **characterized in that** each electromagnetic coupling between a fixed antenna (A1-An) of a receiver module (M1-Mn) and wireless transmission means of an object (0) induces a transmission of identification data (10) transmitted by the identification means (I) of said object (O) towards the reader module (4).

6. Method according to one of the previous claims, **characterized in that** it also comprises a processing of the identification data (10) originating from the identification means (I) of an object (O), and a selective controlof blocking/locking means (Si) which are associated with the receiver module (Mi) the antenna (Ai) of which is electromagnetically coupled to the wireless transmission means (A0) of said object (O).

7. Method according to one of the previous claims, comprising:
- an electromagnetic coupling between the wireless transmission means (A0) of said object (O) and a fixed reception antenna (Ai) associated with a receiver module (Mi),
- a permanent electromagnetic coupling between a secondary fixed reading antenna (3) and an antenna of a reader module (Ai),
**characterized in that** the secondary fixed reading antenna (3) is connected to the fixed reception antenna (Ai) via a plurality of link sections in cascade each comprising an electrical link between a secondary intermediate antenna (102) of said link section and a primary intermediate antenna (103) of said link section and an electromagnetic coupling between said primary intermediate antenna (103) and a secondary intermediate antenna (105) of a following link section.

8. Device (1) for the detection and identification of an object (O) provided with identification means (I) and wireless transmission means (A0), this object (O) being located close to a receiver module (Mi) among a plurality of receiver modules (M1-Mn), this device (1) comprising:
- a plurality of fixed antennae (A1-An) each associated with a receiver module among the plurality of receiver modules (M1-Mn),
**characterized in that** it also comprises:
- analogue switching means (S) for selectively connecting an antenna among said plurality of fixed antennae (A1-An) to a common secondary fixed antenna (3);
- a primary fixed antenna (2) electromagnetically coupled to the secondary fixed antenna (3); and
- a common reader module (4) configured to read identification data (10) originating from said identification means (I), this reader module (4) being connected to the primary fixed antenna (2).

9. Device according to claim 8, **characterized in that** the common reader module (4) is further configured to transmit information to an object (O) close to a receiver module (Mi).

10. Device according to one of claims 8 or 9, **characterized in that** the selective connection means (S) is configured to connect each fixed antenna (A1-An) of the module to the secondary fixed antenna (3) in a sequence.

11. Device according to one of claims 8 to 10, **characterized in that** it also comprises a power supply module (5) connected to the primary fixed antenna (2), this module (5) being arranged in order to transmit electrical energy to the identification means (I) of an object (O) the wireless transmission means (A0) of which are inductively coupled to a fixed antenna (Ai) of a receiver module (Mi), via the electromagnetic coupling between the primary fixed antenna (2) and the secondary antenna (3) and the electromagnetic couplingbetween the fixed antenna (Ai) of the receiver module and the wireless transmission means (A0) of said object (O).

12. Device according to one of claims 9 to 11, **characterized in that** the common secondary antenna (105) is electromagnetically coupled to a primary intermediate antenna (106) this primary intermediate antenna (106) being electrically connected to a secondary intermediate antenna (3) electromagnetically coupled to the primary fixed antenna (2) electrically connected to the reader module.

13. Device according to claim 12, **characterized in that** it also comprises a plurality of pairs of intermediate antennae (103;105) each constituted by a primary intermediate antenna (103) and a secondary intermediate antenna (105) which are electrically connected.

14. Equipment (100) for securely storing a plurality of objects each provided with identification means (50) and wireless transmission means, comprising:
- a group of modules (M1-M5) each configured to receive one object among said plurality of objects, each receiver module (M1-M5) comprising means for selectively blocking/locking an object,
- means for controlling said selective blocking/locking means;
**characterized in that** it also comprises at least a device according to claim 8, the reader module (4) of said device being connected to the fixed primary antenna (2) and cooperating with said control means.

15. Equipment according to claim 14, **characterized in that** it also comprises electrical supplying means (5) connected to the primary fixed antenna (2), which are arranged in order to supply power to the identification means (50) of an object the wireless transmission means of which are inductively coupled to one antenna of one of the receiver modules (M1-M5) of said equipment.

16. Equipment according to one of claims 14 or 15, designed for the management of a set of keys (C1-C5), **characterized in that** each receiver module (M1-M5) comprises:
- a housing (71) arranged to receive a mechanical coupling part (51.1,51.2) of a key (C1-C5) or a key ring, this part including the wireless transmission means (50),
- a fixed antenna (73) of the module arranged close to said housing (71) so as to produce an electromagnetic coupling between said fixed antenna (73) and the wireless transmission means of an object the mechanical coupling part (51.1,51.2) of which is engaged in the receiver housing (71), and
- an electromagnet (E1-E5) comprising a mobile part (61) arranged in order to engage in said mechanical coupling part (51.1,51.2).

17. Equipment according to claim 16, **characterized in that** the mechanical coupling part (51.1,51.2) has one end which comprises in an substantially cylindrical cavity (50) the wireless transmission means and the identification means of the object.

18. Equipment according to one of claims 16 or 17, **characterized in that** the mechanical coupling part (51.1,51.2) comprises:
- a first part comprising:
○ a head which includes the wireless transmission means and the identification means,
○ an indented part for receiving the mobile part of a blocking/locking electromagnet,
○ a non-reversible mechanical coupling part, and
- a second part comprising at least one housing for receiving the non-reversible mechanical coupling part of the first part.

19. Equipment according to one of claims 14 or 15, designed to store in a secure manner weapons provided with identification means and wireless transmission means.

20. Application of the method according to one of claims 1 to 7, for the management of keys (C1-C5) or bunches of keys in a lockable cabinet.

21. Application of the method according to one of claims 1 to 7, for the management of documents in a filing cabinet.

22. Application of the method according to one of claims 1 to 7, for the management of weapons in a weapons locker.

23. Application of the method according to one of claims 1 to 7, for the identification of a vehicle in a parking space.

24. System (SP) for the detection and identification of a vehicle (Vj,Vk,Vl) in a parking space (P1-P4) of a parking area, adapted to implement the method according to one of claims 1 to 7, **characterized in that** this parking space (P1-P4) comprises a fixed reception antenna (Ai1-Ai4) electrically connected to asecondaryfixed antenna (A3) common to all of the parking spaces (P1-P4) of said parking area and electromagnetically coupled to a primary fixed antenna (A2) of a common reader module (L), said vehicle (Vj,Vk,Vl) being equipped with an identifier module comprising an antenna arranged within said vehicle in order to be electromagnetically coupled to the fixed reception antenna of said parking space when said vehicle (Vj,Vk,Vl) is parked in said parking space (P1-P4).

25. System according to claim 24, **characterized in that** the identifier module (Ij,Ik,Il) of the vehicle (Vj,Vk,Vl) is included in one and/or more of the number plates of said vehicle.

26. System according to claim 25, **characterized in that** the identifier module (Ij,Ik,Il) of the vehicle (Vj,Vk,Vl) is provided in the form of a radiofrequency tag (RF tag).

## Patentansprüche

1. Verfahren zur Erfassung und Erkennung eines mit Erkennungs- (I) und drahtlosen Übertragungsmitteln (A0) vorgesehenen Objekts (O), wobei das Objekt (O) nahe einem Empfangsmodul (Mi) unter einer Vielzahl von Empfangsmodulen (M1-Mn) dargestellt wird, enthaltend:
- eine elektromagnetische Kopplung zwischen den drahtlosen Übertragungsmitteln (A0) des genannten Objekts (O) und einer des Empfangsmoduls (Mi) zugeordneten, festen Antenne(Ai);
**dadurch gekennzeichnet, dass** es außerdem umfasst:
- eine analoge Schaltung zwischen jeder festen, eines Empfangsmoduls (M1-Mn) zugeordneten Antenne (A1-An) und einer festen, für alle genannten festen Antennen (A1-An) von Empfangsmodulen gemeinsamen Sekundärantenne(3), sodass die genannte feste Sekundärantenne (3) elektrisch mit jeder der festen Antennen (A1-An) jedes Empfangsmoduls (M1-Mn) nach einander gekoppelt ist, wobei die gemeinsame feste Sekundärantenne (3) mit einer festen Primärantenne(2), welche mit einem für das Lesen von Erkennungsdaten (10) aus den genannten Erkennungsmitteln (I) geeigneten Lesemodul (4) verbunden ist, elektromagnetisch gekoppelt ist.

2. Verfahren nach Anspruch 1, **dadurch gekennzeichnet, dass** es außerdem eine Übertragung von Informationen vom Lesemodul (4) ausgehend an die Erkennungsmittel (I) eines vorab erfassten und erkannten Objekts (O) umfasst.

3. Verfahren nach Anspruch 2, **dadurch gekennzeichnet, dass** es außerdem ein Schreiben von Informationen umfasst, die vom Lesemodul (4) ausgehend in Datenspeicherungsmittel innerhalb eines vorab erfassten und erkannten Objekts (O) übertragen werden.

4. Verfahren nach einem der vorhergehenden Ansprüche, **dadurch gekennzeichnet, dass** jede elektromagnetische Kopplung zwischen einer festen Antenne (A1-An) eines Empfangsmoduls (M1-Mn) und drahtlosen Übertragungsmitteln (A0) eines Objekts (O) durch induktive Kopplung eine Versorgung der Erkennungsmittel (I) innerhalb des genannten Objekts (O) mit von einem mit der festen Primärantenne (2) verbundenen Versorgungsmodul (5) ausgegebenen elektrischer Energie induziert.

5. Verfahren nach Anspruch 4, **dadurch gekennzeichnet, dass** jede elektromagnetische Kopplung zwischen einer festen Antenne (A1-An) eines Empfangsmoduls (M1-Mn) und drahtlosen Übertragungsmitteln eines Objekts (O) eine Übertragung von durch die Erkennungsmittel (I) des genannten Objekts (O) an das Lesemodul (4) ausgegebenen Erkennungsdaten (10) auslöst.

6. Verfahren nach einem der vorhergehenden Ansprüche, **dadurch gekennzeichnet, dass** es außerdem eine Verarbeitung der Erkennungsdaten (10) aus den Erkennungsmitteln (I) eines Objekts (O) sowie eine selektive Steuerung der des Empfangsmoduls (Mi), dessen Antenne (Ai) mit den drahtlosen Übertragungsmitteln des genannten Objekts (O) elektromagnetisch gekoppelt ist, zugeordneten Arretierungs-/Verriegelungsmittel (Si) umfasst.

7. Verfahren nach einem der vorhergehenden Ansprüche, enthaltend:
- eine elektromagnetische Kopplung zwischen den drahtlosen Übertragungsmitteln (A0) des genannten Objekts (O) und einer eines Empfangsmoduls (Mi) zugeordneten, festen Empfangsantenne (Ai),
- eine elektromagnetische Dauerkopplung zwischen einer festen Lese-Sekundärantenne (3) und einer Antenne eines Lesemoduls (Ai),
**dadurch gekennzeichnet, dass** die feste Lese-Sekundärantenne (3) mit der festen Empfangsantenne (Ai) durch eine Vielzahl von Verbindungsabschnitten in Kaskadenschaltung, mit je einer elektrischen Verbindung zwischen einer Zwischen-Sekundärantenne (102) des genannten Verbindungsabschnitts und einer Zwischen-Primärantenne (103) des genannten Verbindungsabschnitts sowie mit einer elektromagnetischen Kopplung zwischen der genannten Zwischen-Primärantenne (103) und einer Zwischen-Sekundärantenne (105) eines folgenden Verbindungsabschnitts verbunden ist.

8. Vorrichtung (1) zur Erfassung und Erkennung eines mit Erkennungs- (I) und drahtlosen Übertragungsmitteln (A0) vorgesehenen Objekts (O), wobei das Objekt nahe einem Empfangsmodul (Mi) unter einer Vielzahl von Empfangsmodulen (M1-Mn) dargestellt wird, und wobei die Vorrichtung (1) umfasst:
- eine Vielzahl von festen, jeweils eines Empfangsmoduls aus der Vielzahl von Empfangsmodulen (M1-Mn) zugeordneten Antennen (A1-An),
**dadurch gekennzeichnet, dass** es außerdem umfasst:
- analoge Schaltungsmittel (S) zur selektiven Verbindung einer Antenne aus der genannten Vielzahl von festen Antennen (M1-Mn) mit einer gemeinsamen, festen Sekundärantenne (3),
- eine mit der festen Sekundärantenne (3) elektromagnetisch gekoppelt feste Primärantenne (2), und
- ein gemeinsames Lesemodul (4), das für das Lesen der von den genannten Erkennungsmitteln (I) ausgehenden Erkennungsdaten (10) geeignet ist, wobei das Lesemodul (4) mit der festen Primärantenne (2) verbunden ist.

9. Vorrichtung nach Anspruch 8, **dadurch gekennzeichnet, dass** das gemeinsame Lesemodul (4) außerdem für die Übertragung von Daten an ein Objekt (O) nahe einem Empfangsmodul (Mi) geeignet ist.

10. Vorrichtung nach einem der Ansprüche 8 oder 9, **dadurch gekennzeichnet, dass** die selektiven Verbindungsmittel (S) zur sequentiellen Verbindung der jeweiligen festen Antennen (A1-An) von Modulen mit der festen Sekundärantenne (3) ausgebildet sind.

11. Vorrichtung nach einem der Ansprüche 8 bis 10, **dadurch gekennzeichnet, dass** sie außerdem ein mit der festen Primärantenne (2) verbundenes Modul (5) für die elektrische Versorgung umfasst, wobei dieses Modul (5) zur Weiterleitung von elektrischer Energie an die Erkennungsmittel (I) eines Objekts (O), dessen drahtlose Übertragungsmittel (A0) mit einer festen Antenne (Ai) eines Empfangsmoduls (Mi) induktiv gekoppelt sind, über die elektromagnetische Kopplung zwischen der festen Primärantenne (2) und der Sekundärantenne (3) sowie über die elektromagnetische Kopplung zwischen der festen Antenne (Ai) des Empfangsmoduls und den drahtlosen Übertragungsmitteln (A0) des genannten Objekts (O) ausgebildet ist.

12. Vorrichtung nach einem der Ansprüche 9 bis 11, **dadurch gekennzeichnet, dass** die gemeinsame Sekundärantenne (105) mit einer Zwischen-Sekundärantenne (106) elektromagnetisch gekoppelt ist, wobei die Zwischen-Sekundärantenne (106) mit einer Zwischen-Sekundärantenne (3) elektrisch verbunden ist, welche mit der festen, mit dem Lesemodul elektrisch verbundenen Primärantenne (2) elektromagnetisch gekoppelt ist.

13. Vorrichtung nach Anspruch 12, **dadurch gekennzeichnet, dass** sie außerdem eine Vielzahl von Zwischenantennen-Paaren (103; 105), aus einer miteinander elektrisch verbundenen Zwischen-Primärantenne (103) und einer Zwischen-Sekundärantenne (105) jeweils bestehend, umfasst.

14. Ausrüstung (100) zur gesicherten Aufnahme einer Vielzahl von jeweils mit Erkennungsmitteln (50) und drahtlosen Übertragungsmitteln vorgesehenen Objekten, enthaltend:
- eine Menge von Modulen (M1-M5), die jeweils für den Empfang eines Objekts aus der genannten Vielzahl von Objekten ausgebildet sind, wobei jedes Empfangsmodul (M1-M5) Mittel zur selektiven Arretierung/ Verriegelung eines Objekts umfasst,
- Mittel zur Steuerung der genannten selektiven Arretierungs/Verriegelungsmittel,
**dadurch gekennzeichnet, dass** sie außerdem wenigstens eine Vorrichtung nach Anspruch 8 umfasst, wobei das Lesemodul (4) der genannten Vorrichtung mit der festen Primärantenne (2) verbunden ist und mit den genannten Steuerungsmitteln zusammenarbeitet.

15. Ausrüstung nach Anspruch 14, **dadurch gekennzeichnet, dass** sie außerdem mit der festen Primärantenne (2) verbundene Mittel zur elektrischen Energieversorgung (5) umfasst, welche für die elektrische Versorgung der Erkennungsmittel (50) eines Objekts, dessen drahtlose Übertragungsmittel mit der einen Antenne eines der Empfangsmodule (M1-M5) der genannten Ausrüstung induktiv gekoppelt sind, ausgebildet werden.

16. Ausrüstung nach einem der Ansprüche 14 oder 15, für die Verwaltung einer Menge von Schlüsseln (C1-C5) vorgesehen und **dadurch gekennzeichnet, dass** jedes Empfangsmodul (M1-M5) umfasst:
- ein Lagergehäuse (71), für den Empfang eines für mechanische Kopplung vorgesehenen Teils (51.1, 51.2) einer Schlüssel (C1-C5) oder eines Schlüsselanhängers ausgebildet, wobei dieser Teil die drahtlosen Übertragungsmittel (50) enthält,
- eine feste Modulantenne (73), nahe dem genannten Lagergehäuse (71) angeordnet, sodass eine elektromagnetische Kopplung zwischen der genannten festen Antenne (73) und den drahtlosen Übertragungsmitteln eines Objekts, dessen für mechanische Kopplung vorgesehene Teil (51.1, 51.2) im Empfangslagergehäuse (71) eingeführt ist, hergestellt wird, und
- einen Elektromagnet (E1-E5) mit einem mobilen, für die Einführung in den genannten für mechanische Kopplung vorgesehenen Teil (51.1, 51.2) ausgebildeten Teil (61).

17. Ausrüstung nach Anspruch 16, **dadurch gekennzeichnet, dass** der für mechanische Kopplung vorgesehene Teil (51.1, 51.2) ein Ende mit den drahtlosen Übertragungsmitteln und den Erkennungsmitteln des Objekts in einem im Wesentlichen zylinderischen Hohlraum (50) enthält.

18. Ausrüstung nach einem der Ansprüche 16 oder 17, **dadurch gekennzeichnet, dass** der für mechanische Kopplung vorgesehene Teil (51.1, 51.2) umfasst:
- ein erstes Stück mit:
- einem Kopf, die drahtlosen Übertragungsmittel und die Erkennungsmittel enthaltend,
- einem abgeschirmten Teilabschnitt zum Empfang des mobilen Stücks eines Arretierungs-/Verriegelungselektromagnets,
- einem für irreversible mechanisch Kopplung vorgesehenen Teil und
- ein zweites Stück, wenigstens ein Lagergehäuse zur Aufnahme des für irreversible mechanisch Kopplung vorgesehenen Teils des ersten Stücks enthaltend.

19. Ausrüstung nach einem der Ansprüche 14 oder 15, zur gesicherten Aufnahme von mit Erkennungsmitteln und drahtlosen Übertragungsmitteln vorgesehenen Waffen.

20. Anwendung des Verfahrens nach einem der Ansprüche 1 bis 7 zur Verwaltung von Schlüsseln (C1-C5) oder von Schlüsselbunden in einem Schlüsselschrank.

21. Anwendung des Verfahrens nach einem der Ansprüche 1 bis 7 zur Verwaltung von Dokumenten in einem Dokumentenfach.

22. Anwendung des Verfahrens nach einem der Ansprüche 1 bis 7 zur Verwaltung von Waffen in einem Waffenschrank.

23. Anwendung des Verfahrens nach einem der Ansprüche 1 bis 7 zur Erkennung eines Fahrzeugs auf einem Parkplatz.

24. System (SP) zur Erfassung und zur Erkennung eines Fahrzeugs (Vj, Vk, Vl) auf einem Parkplatz eines Parkhauses (P1-P4), für die Umsetzung des Verfahrens nach einem der Ansprüche 1 bis 7 geeignet und **dadurch gekennzeichnet, dass** dieser Parkplatz (P1-P4) eine feste Empfangsantenne (Ai1-Ai4) umfasst, die mit einer festen, für alle Parkplätze (P1-P4) des genannten Parkhauses gemeinsamen Sekundärantenne (A3) elektrisch verbunden und mit einer festen Primärantenne (A2) eines gemeinsamen Lesemoduls (L) elektromagnetisch verbundenen ist, wobei das genannte Fahrzeug (Vj, Vk, Vl) mit einem Erkennungsmodul ausgestattet ist, welches eine Antenne umfasst, die innerhalb des genannten Fahrzeugs derart ausgebildet ist, dass sie mit der festen Empfangsantenne des genannten Parkplatzes elektromagnetisch verbunden ist, wenn das Fahrzeug (Vj, Vk, Vl) auf dem genannten Parkplatz (P1-P4) steht.

25. System nach Anspruch 24, **dadurch gekennzeichnet, dass** das Erkennungsmodul (Ij, Ik, Il) des Fahrzeugs (Vj, Vk, Vl) in einem der und/oder in den Kennzeichen des genannten Fahrzeugs enthaltend ist.

26. System nach Anspruch 25, **dadurch gekennzeichnet, dass** das Erkennungsmodul (Ij, Ik, Il) des Fahrzeugs (Vj, Vk, Vl) in der Form eines Radiofrequenzschildes (tag RF) geliefert wird.
